# EUROPÄISCHE PATENTANMELDUNG

(11) **EP 0 566 222 A1**
(43) Veröffentlichungstag der Anmeldung: **20.10.1993**
(21) Anmeldenummer: 93250078.8
(22) Anmeldetag: 11.03.1993
(51) Int. Cl.: B01D 29/11, B01D 29/52, B01D 29/66, B01D 29/72, B01D 29/80, B01D 37/02

(54) **Verfahren zum Nachreinigen der Filterelemente eines Anschwemmfilters**

(30) Priorität: 14.04.1992 DE 4212923
(71) Anmelder: MANNESMANN Aktiengesellschaft, D-40027 Düsseldorf (DE)
(72) Erfinder: Heusler, Helmut, W-4300 Mülheim (DE); Kolisch, Eberhard, W-4044 Kaarst 2 (DE)
(74) Vertreter: Meissner, Peter E., Dipl.-Ing.

(57) **Zusammenfassung**

Die Erfindung betrifft ein Verfahren zum Nachreinigen der Filterelemente eines Anschwemmfilters im Trockenaustrag.
Um die auf der Oberfläche der Filterelemente nach dem Trockenaustrag verbleibenden Rückstände wirtschaftlich und einfach entfernen zu können, wird vorgeschlagen, daß nach dem Entleeren des Trübraumes und Entfernen des Filterkuchens Filtrat in den Trübraum geleitet wird, wobei während des Einleitens des Filtrates in den Trübraum mindestens die Oberfläche des Filtrates im Bereich der Filterelemente in Vibration versetzt wird.

## Beschreibung

Die Erfindung betrifft ein Verfahren zum Nachreinigen der Filterelemente eines Anschwemmfilters mit Trockenaustrag.

Anschwemmfilter mit Trockenaustrag nach dem Stand der Technik werden zum Reinigen von flüssigen Medien eingesetzt, wobei in einer ersten Anschwemmphase ein Filterhilfsmittell, wie Kieselgur, mit Flüssigkeit in den Trübraum geleert wird. Das Filterhilfsmittel setzt sich an der Oberfläche der Filterelemente ab und bildet dort eine Filterschicht, die die zu filtrierenden Partikel zurückhält. In bestimmten Zeitintervallen müssen die Filterelemente vom anhaltenden Filterkuchen gereinigt werden, um ein Verstopfen des Filters zu vermeiden und um die angesammelten Partikel zu entfernen.

Dies erfolgt bei Anschwemmfiltern mit Trockenaustrag dadurch, daß mit Hilfe von in den Trübraum geleiteter Druckluft die Trübe aus diesem Raum herausgedrückt wird, wobei die Druckluft gleichzeitig den schlammförmig an den Filterelementen anhaftenden Filterkuchen trocknet und spröde macht. Der so getrocknete Filterkuchen wird dann, vorzugsweise durch Vibration der Filterelemente abgeklopft und fällt durch eine bodenseitige Öffnung des Anschwemmfilters in einen darunter angeordneten Behälter.

Es ist in der Praxis auch schon vorgeschlagen worden, durch Beaufschlagung der Filterelemente von der Reinseite aus mit Druckluft anhaftende Filterkuchenreste zu entfernen.

Im Anschluß daran wird bei bekannten Anschwemmfiltern der Trübraum erneut gefüllt, wozu Filtrat verwendet wird, das ggf. in einem separaten Anschwemmtank mit dem Filterhilfsmittel gemischt wird. Beim Anschwemmen füllen sich Trübraum und Filtratraum mit dem Filtrat, bis der vollständig gefüllte Anschwemmfilter für ein neues Arbeitsspiel zur Verfügung steht.

Das bekannte Verfahren des Trockenaustrags hat den Nachteil, daß mit Hilfe der üblichen Klopf- und Rütteleinrichtungen zwar ein Großteil des Filterkuchens von den Filterelementen entfernt werden kann, doch feine Partikel und Filterhilfsmittelreste auf der Oberfläche der Filterelemente verbleiben. Dies führt dazu, daß die Standzeit des Filters verkürzt wird, weil diese verbleibenden Rückstände in keiner Trockenaustragphse vollständig entfernt werden, sondern sich vielmehr vermehren. Auch das Durchspülen der Filterelemente von der Reinseite aus vermag nicht sämtliche Filterkuchenreste von den Filterelementen zu entfernen, so daß mit der Zeit vermehrt Rückstände die Filterelemente verstopfen.

In der DE-AS Sch 8066 12 d,27, ausgelegt am 13.05.1953 und der DE-AS M 1204. 12d.30, ausgelegt am 21.08.1952 werden Verfahren und Anschwemmfilter beschrieben, wonach Filtermittel mit Hilfe von oszillierenden Flüssigkeiten gereinigt werden.

Der vorliegenden Erfindung liegt, ausgehend von den geschilderten Problemen und Nachteilen des Standes der Technik die Aufgabe zugrunde, ein Verfahren zum Nachreinigen der Filterelemente eines gattungsgemäßen Anschwemmfilters zu schaffen, das die auf der Oberfläche der Filterelemente nach dem Trockenaustrag verbleibenden Rückstände wirtschaftlich und einfach entfernt.

Zur Lösung der Aufgabe wird erfindungsgemäß vorgeschlagen, daß nach dem Entleeren des Trübraumes und Entfernen des Filterkuchens Filtrat in den Trübraum geleistet wird, wobei während des Einleitens des Filtrates in den Trübraum mindestens die Oberfläche des Filtrates im Bereich der Filterelemente in Vibration versetzt wird.

Das vorgeschlagene Verfahren sieht also vor, daß zunächst der Anschwemmfilter bzw. dessen Trübraum in herkömmlicher Weise entleert wird, wobei der Filterkuchen mit Hilfe von Druckluft getrocknet und dann entfernt wird. Danach wird Filtrat in den Trübraum geleitet, wobei die Oberfläche des Filtratbades, dessen Pegel langsam im Trübraum ansteigt, in Vibrationen versetzt wird. Die dadurch entstehenden kurzen Wellen erzeugen an den Filterelementen einen intensiven Reinigungseffekt. Die kavitationsähnlichen Strömungsverhältnisse reinigen sukzessive die Filterelemente mit steigendem Filtratbadspiegel. Auf diese Weise wird jede Stelle des Filterelementes intensiv gereinigt und gleichzeitig der Trübraum und Filtratraum gefüllt.

In einer Ausgestaltung der Erfindung ist vorgesehen, daß die Vibration des Filtrates durch mechanische Vibrationsbewegungen der Filterelemente erzeugt wird. Wenn die Filterelemente in kurze Schwingungen, beispielsweise von zwei Hz mit Amplituten von etwa 5 mm versetzt werden, so gerät dadurch die Oberfläche des Filtratbades in Vibration, d. h. es entstehen Wetten, die ein intensives Reinigen der Filterelemente bewirken. Selbst beim Schwingen der Filterelemente in ihrer Axialrichtung entstehen Turbulenzen, die die Reinigungswirkung verstärken.

In einer Ausgestaltung der Erfindung ist vorgesehen, das Filtrat selbst mittels Ultraschall in Schwingungen zu versetzen. Bei diesem Vorschlag bleibt der Reinigungseffekt nicht auf den Bereich der Filtratbadoberfläche beschränkt, so daß noch bessere Reinigungsergebnisse zu erwarten sind. Gleichzeitig wird das Filtrat auf diese Weise entgast, was für die spätere Anschwemmung vorteilhaft ist.

Natürlich kann das Filtrat auch nach einem anderen Vorschlag der Erfindung mechanisch in gezielte Vibrationsbewegungen versetzt werden, beispielsweise durch ein Rührwerk. Auch kann, und das ist ein weiterer Vorschlag der Erfindung, die Vibrationserzeugung des Filtrates pneumatisch erfolgen.

Grundsätzlich kann das Filtrat auch von der Reinseite der Filterelemente in den Trübraum geleitet werden, wobei in jedem Fall das Filtrat direkt oder indirekt in die erfindungsgemäße Vibrationsbewegung versetzt wird.

Der Vorteil aller vorgeschlagenen erfindungsgemäßen Verfahrensschritte ist darin zu sehen, daß im Gegensatz zu herkömmlichen Reinigungsmethoden eine gezielte Reinigung jedes Filterelementabschnittes erfolgen kann. Wurde die Reinigung der Filterelemente, wie beim Stand der Technik vorgeschlagen, durch Rückspülen erfolgen, so wurden nur die Bereiche gereinigt, die strömungstechnisch günstig liegen. Andere Bereiche der Filterelemente bleiben ungereinigt und reichern sich mit Schmutzpartikeln soweit an, daß sich die Filterelemente langsam zusetzen.

Das erfindungsgemäße Verfahren läßt sich mit relativ einfachen Mitteln realisieren, wobei unerwartete Reinigungserfolge erreicht werden. Durch die Vibration des Filtrates wirken an der Oberfläche der Filterelemente Scherkräfte, die den Feinschlamm sicher entfernen. Da die Scherkräfte entsprechend der wechselnden Schwingungsrichtung in wechselnden Richtungen wirken, ist die Reinigungswirkung intensiv.

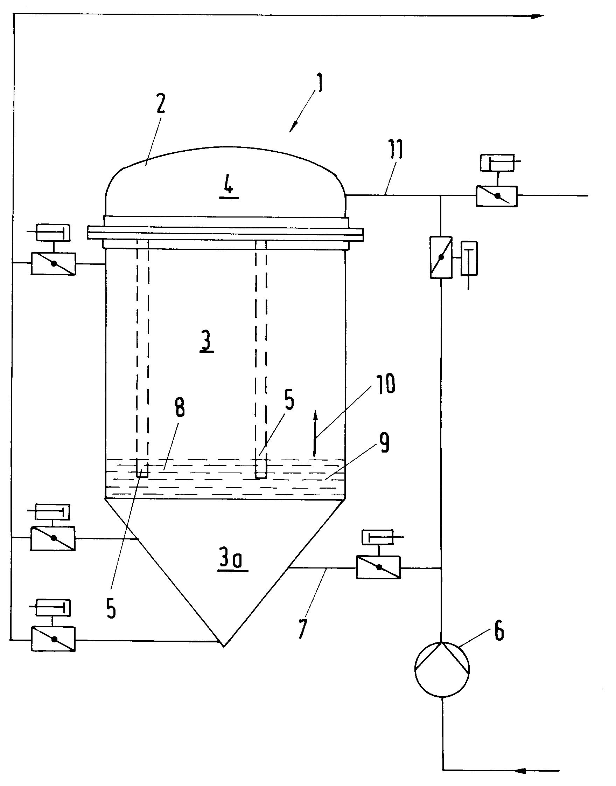

Zur Verdeutlichung des erfindungsgemäßen Verfahrens ist in der Zeichnung grob schematisch ein Anschwemmfilter dargestellt, und zwar während des Füllvorganges. Der Anschwemmfilter ist mit 1 bezeichnet und besteht aus einem vorzugsweise zylindrischen Filtergehäuse 2, das in den Trübraum 3 und den Filtratraum 4 unterteilt ist. Im Trübraum sind die vom zu filternden Medium durchströmten Filterelemente als Filterkerzen 5 angedeutet (es sind nur zwei von einer Vielzahl Filterkerzen dargestellt). Das Innere der Filterkerzen 5 ist mit dem Filtratraum 4 verbunden. Über die Anschwemmpumpe 6 und die Leitung 7 kann Filtrat in den unteren Teil 3a des Trübraumes eingeleitet werden, um den Anschwemmfilter 1 nach dem Entleeren und Austragen des Filterkuchens neu zu füllen.

In erfindungsgemäßer Weise wird während des Fültens des Anschwemmfilters 1 über die Leitung 7 die Oberfläche 8 des mit 9 bezeichneten Filtrates dadurch in Vibration versetzt, daß die Filterkerzen 5 ihrerseits vibrierend angetrieben werden. Während das Filtratbad in Pfeilrichtung 10 im Anschwemmlilter 1 ansteigt, reinigen die durch die Vibration der Filterkerzen 5 erzeugten Wellen auf der Oberfläche 8 des Filtrates 9 die Filterkerzen sehr intensiv. Nachdem der Anschwemmfilter 1 gefüllt ist, kann gegebenenfalls ein Filterhilfsmittel zugesetzt werden.

Das Füllen des Anschwemmfilters 1 kann natürlich auch über die Reinseite, d. h. den Filtratraum 4 erfolgen. Dazu wird Filtrat mit Hilfe der Pumpe 6 über die Leitung 11 in den Filtratraum 4 geleitet und gelangt durch das Innere der Filterkerzen 5 in den Trübraum 3. In gleicher Weise wie beim vorhergehend beschriebenen Betrieb des Anschwemmfilters 1 während der Füllphase wird das Filtrat in Vibration versetzt, so daß auch bei dieser Füllweise ein intensives Reinigen der Filterkerzen erfolgt.

## Patentansprüche

1. Verfahren zum Nachreinigen der Filterelemente eines Anschwemmfilters mit Trockenaustrag,
dadurch gekennzeichnet,
daß nach dem Entleeren des Trübraumes und Entfernen des Filterkuchens Filtrat in den Trübraum geleitet wird, wobei während des Einleitens des Filtrates in den Trübraum mindestens die Oberfläche des Filtrates im Bereich der Filterelemente in Vibration versetzt wird.

2. Verfahren nach Anspruch 1,
dadurch gekennzeichnet,
daß die Vibration des Filtrates durch mechanische Vibrationsbewegungen der Filterelemente erzeugt wird.

3. Verfahren nach Anspruch 1,
dadurch gekennzeichnet,
daß das Filtrat mittels Ultraschall in Schwingungen versetzt wird.

4. Verfahren nach Anspruch 1,
dadurch gekennzeichnet,
daß das Filtrat mittels eines mechanischen Rührwerkes in Vibrationsbewegungen versetzt wird.

5. Verfahren nach Anspruch 1,
dadurch gekennzeichnet,
daß das Filtrat pneumatisch in Vibrationsbewegung versetzt wird.

6. Verfahren nach Anspruch 1 bis 5,
dadurch gekennzeichnet,
daß das Filtrat von der Reinseite der Filterelemente in den Trübraum geleitet wird.
